Europäisches Patentamt

European Patent Office

Office européen des brevets

(11) Numéro de publication: **0 266 809 B1**

(12) **FASCICULE DE BREVET EUROPEEN**

(45) Date de publication de fascicule du brevet: **01.04.92**  (51) Int. Cl.⁵: **A01J 5/08**

(21) Numéro de dépôt: **87201806.4**

(22) Date de dépôt: **22.09.87**

(54) **Gobelet trayeur pour machine à traire.**

(30) Priorité: **03.11.86 FR 8615378**

(43) Date de publication de la demande:
**11.05.88 Bulletin 88/19**

(45) Mention de la délivrance du brevet:
**01.04.92 Bulletin 92/14**

(84) Etats contractants désignés:
**AT BE CH DE ES FR GB GR IT LI LU NL SE**

(56) Documents cités:
**AU-A- 114 057**
**AU-A- 6 557 074**
**DE-A- 2 451 953**
**FR-A- 2 390 092**
**FR-A- 2 413 850**

(73) Titulaire: **Daffini, Jean-Pierre**
**Saint-Joseph Le Cayssiols**
**F-12850 Onet-Le-Chateau(FR)**

(72) Inventeur: **Daffini, Jean-Pierre**
**Saint-Joseph Le Cayssiols**
**F-12850 Onet-Le-Chateau(FR)**

(74) Mandataire: **Dellicour, Paul**
**Office de Brevets E. Dellicour rue Fabry**
**18/012**
**B-4000 Liège(BE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a trait aux installations de traite mécanique utilisant notamment des appareils qui exercent sur le pis de la vache, de la brebis, de la chèvre, etc... des succions et des pressions combinées qui permettent, sans intervention humaine, le recueil du lait à l'abri des souillures environnantes.

D'une manière générale, une machine à traire utilise en aval, des gobelets trayeurs préformés pour recevoir en entrée, le trayon de l'animal et en sortie, un manchon alimenté en vide pour aspirer dans le gobelet le susdit trayon et le lait qui en sort. En amont, les manchons de plusieurs gobelets trayeurs sont interconnectés aux tubulures d'entrée d'un collecteur qui, constitué d'un corps creux formant chambre de vide, comporte également une tubulure de sortie connectée à un récepteur central dans lequel est généré le vide et recueilli le lait de plusieurs collecteurs. Ce manchon de forme cylindrique et façonné dans un matériau élastomère pour être emmanché dans un gobelet cylindrique fabriqué dans un matériau rigide (en métal ou en plastique) se présente sous la forme d'une membrane déformable préformée d'une lèvre à son extrémité supérieure qui recouvre la partie supérieure du gobelet. Il reçoit à son extrémité inférieure un tuyau alimenté en vide pour aspirer le trayon de l'animal à son extrémité supérieure (de manière à plaquer la lèvre sur la mamelle de l'animal autour du trayon) et le lait qui en sort.

Il est important de noter que dans les procédés de traite automatique, les manchons qui agissent par contraction de la membrane sur la hauteur du trayon de l'animal présentent un grand inconvénient dans la mesure où le volume intérieur du machon confiné entre le pis du trayon et la sortie du manchon est soumis au vide engendré par ledit tuyau. Ce vide crée une dépression s'exerçant en permanence sur la point du trayon causant une gêne pour la circulation du sang dans ledit trayon, désagréable pour l'animal. En outre, il se produit à l'intérieur du manchon, un effet de pompage pendant les alternances permanentes de gonflement et de dégonflement à l'intérieur du manchon, correspondant aux phases de décontraction et de contraction de la membrane de la chambre de travail. Cet effet de pompage a une conséquence immédiate sur l'écoulement en continu du lait car ce dernier subit un mouvement répété de remontée vers le trayon qui le projette contre la pointe de ce dernier. Ce facteur a une influence néfaste dès que le flux du lait commence à être important.

D'autre part, dans les grandes installations de traite mécanique automatique où la surveillance n'est pas toujours assumée en permanence, il arrive que les gobelets trayeurs se dégagent de leur emprise sur les trayons de l'animal et tombent sur le sol, lequel est garni généralement de salissures ayant pour conséquence immédiate d'entraîner une souillure du lait par aspiration desdites salissures à travers les gobelets trayeurs toujours générés en vide.

Ces dernières années, de nombreuses améliorations techniques visant notamment à assurer l'enchaînement automatique de toutes les opérations de traite mécanique ont été apportées aux installations afin d'améliorer la quantité et les qualités physico-chimiques du lait recueilli en sortie du récepteur central tout en conciliant les paramètres qui assurent un équilibre physiologique de l'animal soumis à la traite mécanique. Ainsi, de nombreux perfectionnements ont porté sur le fonctionnement des gobelets trayeurs, sur leur adaptation aux trayons des différents animaux, sur les dispositifs de stalles mobiles montées dans les salles de traite, etc...

Selon les mêmes objectifs, la présente invention a pour objet un perfectionnement portant plus particulièrement sur le fonctionnement des gobelets trayeurs d'une machine à traire du type de celui dans lequel le manchon est façonné de manière à délimiter, sur la hauteur du gobelet, au moins deux chambres de travail confinées entre la paroi indéformable du gobelet et la paroi déformable du manchon. Chacune de ces deux chambres, de volume variable, communique avec l'extérieur au moyen de deux embouts débouchant à l'extérieur dudit gobelet afin que lesdites chambres soient alimentées par des cycles simultanés et en opposition de phase, de pression et de dépression d'un fluide (gaz ou liquide choisi en fonction de la déformabilité du matériau constitutif du manchon). Dans le contexte de la présente invention, il est utile de préciser que les termes "pression" et "dépression" s'entendent comme deux quotients dont le premier est plus important que le second afin d'alimenter lesdites chambres de travail de manière qu'en cycle de "pression" le volume de ladite chambre de travail augmente et qu'en cycle de "dépression", le volume de la chambre de travail régresse. Pour des raisons de simplicité relatifs à la mise en oeuvre technique, le cycle de "pression" est obtenu en générant un flux d'air à pression atmosphérique et le cycle de "dépression" est obtenu en créant le vide. Un tel manchon est utilisé dans le gobelet trayeur pour machine à traire, décrit et représenté dans le document FR-A-2 413 850. Lors de la mise au point de son manchon, le but recherché par le déposant a été essentiellement axé sur l'obtention d'une contraction du manchon évoluant de haut en bas sur toute la hauteur du trayon et ce, grâce à une alternance des pulsations produites d'abord à l'intérieur de la chambre supérieure pour agir sur la portion haute du trayon puis à l'intérieur de la chambre inférieure pour agi r sur la portion basse du trayon. Avantageusement, les effets des pressions et dépressions alternées se croisent sur une hauteur intermédiaire des deux chambres de travail afin de produire une contraction uniforme sur toute la hauteur du trayon et d'empêcher ainsi la formation d'une poche à lait qui se trouverait comprimée entre les deux pulsations.

Un autre manchon de ce type a également été proposé dans le dispositif de traite mécanique, décrit et représenté dans le document FR-A-2 390 092, qui forme la base du préambule de la revendication 1. Dans le gobelet-trayeur de ce dispositif, les deux chambres de travail du manchon sont séparées par une frontière de manière à ce que d'une part, la membrane de la chambre supérieure du manchon puisse emprisonner le trayon sur toute sa hauteur afin que la chambre supérieure ait une action directe sur le trayon de l'animal et à ce que d'autre part, la membrane de la chambre inférieure ne joue le rôle que de régulateur en fermant et/ou en ouvrant le passage entre ladite frontière et le susdit tuyau d'avacuation, du circuit d'alimentation en vide à l'intérieur du manchon.

Partant de ces différentes constatations et afin d'obvier aux inconvénients précités, le demandeur a mené des recherches qui ont abouti à la réalisation d'un nouveau gobelet trayeur du type de celui comprenant un manchon comportant sur sa hauteur au moins deux chambres de travail supérieure et inférieure, séparées par une troisième chambre intermédiaire délimitant, à l'intérieur du manchon et sur une hauteur du gobelet, la susdite frontière entre la chambre supérieure et la chambre inférieure.

Le manchon de l'invention se distingue essentiellement de l'art antérieur par le fait qu'il est disposé à l'intérieur du gobelet de manière à définir sur la hauteur de celui-ci, trois postes de travail successifs.

Le premier poste, dit poste de traite, est établi sur la hauteur de la membrane du manchon délimitée par la chambre de travail supérieure, laquelle membrane assume en alternance une contraction et une décontraction du volume intérieur du manchon emprisonnant le trayon, afin de reproduire l'opération manuelle d'une traite qui permet de tirer le lait de la pointe du trayon.

Le deuxième poste, dit poste temporisateur, est établi à l'intérieur du manchon, sur une hauteur du gobelet délimitée entre la chambre supérieure et la chambre inférieure, pour définir une interface entre le premier poste de traite et le poste suivant afin que les déf ormations de la membrane du manchon correspondant à la chambre supérieure n'aient aucune incidence sur celles de la membrane correspondant à la chambre inférieure, et vice-versa.

Le troisième poste, dit poste de régulation, est établi sur la hauteur de la membrane du manchon délimitée par la chambre de travail inférieure, laquelle membrane agit sous l'effet des compressions et des décompressions engendrées dans le volume intérieur de ladite chambre, pour fermer et/ou pour ouvrir le passage entre la chambre intermédiaire et le susdit tuyau d'évacuation, du circuit d'alimentation en vide à l'intérieur du manchon.

La prédisposition de ces trois chambres sur la hauteur du manchon, et en alternance entre l'extérieur et l'intérieur de ce dernier, assure ainsi pendant la phase de travail opérée par le poste de traite, la libération totale de la pointe du trayon puisque cellle-ci se trouve logée dans la chambre intermédiaire indéformable du poste temporisateur. En outre, grâce au poste régulateur qui, pendant l'opération de contraction du poste de traite, ouvre le passage entre la chambre intermédiaire et le tuyau d'évacuation, la source de dépression générée par ce dernier est donc alimentée et évacue le lait tiré de la pointe du trayon lors de la contraction précédente du poste de traite.

Par ailleurs, pendant la phase suivante de repos du poste de traite où la membrane se décontracte, on observe que, d'une part que la hauteur du trayon est totalement libérée de l'emprise de la membrane et d'autre part, la fermeture du passage du vide en provenance du tuyau d'évacuation, assumée par le poste régulateur, assure une élimination quasie totale des effets de reflux tels que décrits ci-dessus pour les gobelets trayeurs de l'art antérieur. Par voie de conséquence, l'évacuation du lait vers le tuyau de sortie s'accélère considérablement car le lait ne peut pas remonter dans le manchon puisque à ce moment là, la partie supérieure du manchon au niveau du poste de traite se relâche et provoque donc une augmentation de volume autour du trayon. Ainsi, les problèmes d'infection et le stress de l'animal sont supprimés et le rendement de la traite en est d'autant amélioré puisque le confort physiologique de l'animal est respecté pendant l'opération de traite automatique telle que décrite ci-dessus.

Ce manchon offre aussi la possibilité de moduler le rapport des fréquences de pulsations entre la chambre supérieure et la chambre inférieure afin d'harmoniser les moyens mécaniques avec les différentes phases physiologiques de la traite (début de traite, mi-traite et fin de traite) ou en fonction du débit du lait tiré qui peut être contrôlé par des moyens appropriés (cellule optique, sonde thermique, temporisateur,...). Par exemple, la chambre de travail supérieure peut être animée d'un cycle de dépression et de pression plus rapide que celui de la chambre inférieure afin d'obtenir une vibration rapide de la membrane qui agit sur le trayon de la mère pour simuler la mastication du petit de la mère.

Grâce au manchon de l'invention, le trayon de l'animal se trouve périodiquement au repos favorisant également l'arrivée du lait pour l'opération de contraction suivante. De plus, le trayon est massé, n'est pas étiré constamment et démesurément et les effets de garrot et de congestion ainsi que les ruptures de veinures sont supprimés.

Comme on l'a précisé au début de ce mémoire, dans les grandes installations de traite, il arrive parfois que le gobelet trayeur se détache du trayon de l'animal. La technique de traite développée par le demandeur dans la mise au point du manchon de l'invention, permet de pallier cet inconvénient. En effet, la membrane du manchon de la chambre de travail inférieure peut être avantageusement préformée de manière à fermer automatiquement le passage entre le tuyau d'évacuation et la chambre intermédiaire dès que le gobelet trayeur se détache inopinément. Ce paasage obturé protège alors le lait recueilli en amont.

Les objectifs du gobelet trayeur de la machine à traire de l'invention sont nombreux et notamment ceux :

- d'offrir à celle-ci une grande souplesse d'utilisation en fonction des paramètres physiques du lait (débit, épaisseur, ...) et physiologiques de l'animal (stress, dimensions du trayon, ...),
- d'installer à l'intérieur du gobelet, l'opération de traite proprement dite avec l'opération de régulation de pompage du lait sortant de la pointe du trayon,
- d'automatiser entièrement toute l'opération de traite à l'intérieur du gobelet, par un contrôle des mouvements alternés de pression et de dépression entre les deux chambres supérieure et inférieure,
- d'optimiser le rendement de production de lait,
- de parachever la qualité du lait obtenu,
- etc...

L'invention venant d'être évoquée ci-dessus dans son ensemble le plus élémentaire, d'autres caractéristiques et d'autres avantages concernant plusieurs méthodes préférées de réalisation d'un gobelet trayeur illustrant les concepts fondamentaux de l'invention et données à titre d'exemples non limitatifs, seront mieux compris en se référant à la description détaillée ci-dessous.

Cette description est annexée de dessins stylisés, sur lesquels :

La figure 1 est une vue en coupe verticale d'un premier mode de réalisation d'un gobelet trayeur de l'invention représenté en phase de traite du trayon de l'animal.

La figure 2 est une vue en coupe verticale du gobelet trayeur de la figure 1, représenté en phase de repos du trayon.

La figure 3 est une vue en coupe verticale d'un deuxième mode de réalisation d'un gobelet trayeur de l'invention, représenté en phase de traite.

La figure 4 est une vue en coupe verticale du gobelet trayeur de la figure 3, représenté en phase de repos du trayon de l'animal.

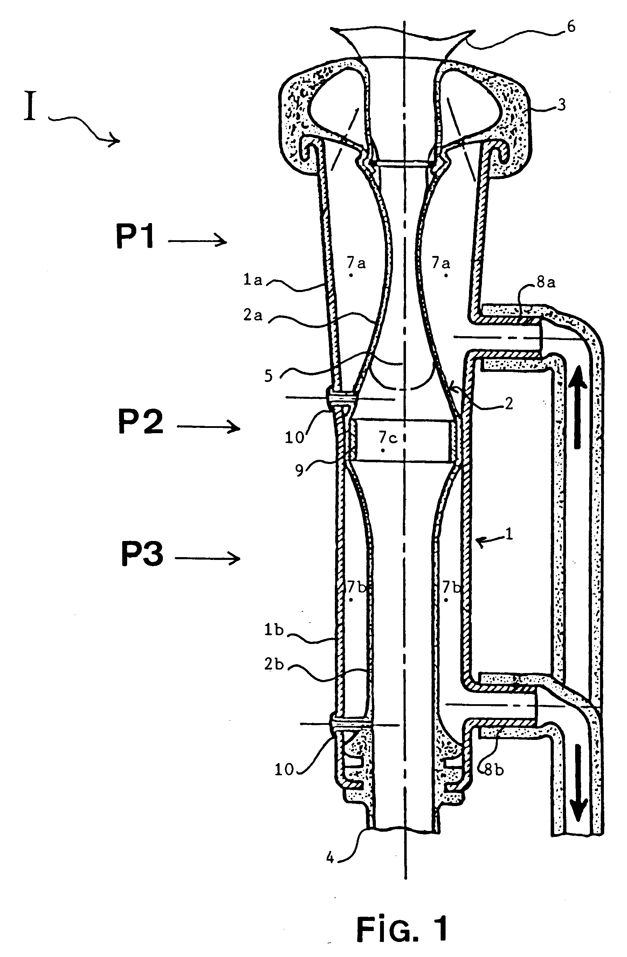

Tels qu'ils sont représentés sur les dessins des figures 1, 2, 3 et 4, les deux gobelets trayeurs de l'invention, référencés I et II et faisant partie d'une machine à traire de conception classique, sont constitués chacun d'un gobelet 1 comprenant une portion supérieure 1a - conique pour le gobelet I, et étranglée pour le gobelet II - et une portion inférieure 1b cylindrique. Un manchon 2, façonné dans un matériau élastomère, est emmanché à l'intérieur du gobelet 1, de façon étanche aux deux extrémités de ce dernier. Il est préformé d'une lèvre 3 à son extrémité supérieure pour recouvrir le bord supérieur du gobelet 1 et reçoit à son extrémité inférieure, un tuyau 4 destiné à être raccordé à une tubulure de raccordement interconnectée avec l'intérieur du manchon 2 à un collecteur de conception classique. Ce tuyau 4 est alimenté, via ledit collecteur, en vide pour l'évacuation du lait et pour aspirer le trayon 5 de l'animal venant s'introduire à l'intérieur du manchon 2; la lèvre 3 venant alors s'écraser sous la mamelle 6 de l'animal autour dudit trayon 5.

Un des premiers objets de l'invention consiste à définir sur la hauteur du manchon 2, se situant à l'intérieur du gobelet 1, deux chambres déformables de travail, appelée chambre supérieure 7a pour la première et chambre inférieure 7b pour la seconde. Ces deux chambres sont confinées:

- pour la première 7a, entre la paroi indéformable 1a du gobelet et la paroi déformable 2a de la membrane se trouvant en haut du manchon;
- et pour la seconde 7b, entre la paroi indéformable 1b du gobelet 1 et la paroi déformable de la membrane 2b du manchon dans sa partie basse.

Chacune de ces deux chambres 7a et 7b communique avec l'extérieur du gobelet 1 au moyen d'un embout 8a pour la première et 8b pour la seconde afin que lesdites chambres soient alimentées par des cycles, simultanés et en opposition de phase, de pression atmosphérique ("pression") et de vide ("dépression").

Afin d'illustrer sur les dessins, le processus de travail des chambres 7a et 7b, les différents cycles de travail des deux chambres 7a et 7b sont symbolisés par des flèches identifiant, de par leur direction, le parcours de l'air atmosphérique dans les susdites chambres. Ainsi, lorsque la direction des flèches est orientée vers l'intérieur des chambres 7a et 7b, le cycle est considéré en "pression" et lorsqu'elle est orientée vers l'extérieur desdites chambres afin de créer le vide, le cycle est considéré en "dépression". Comme on l'a précisé utilement ci-dessus, la pression atmosphérique et le vide peuvent être remplacés par d'autres valeurs puisque le but recherché est que la première pression soit supérieure à la seconde afin d'obtenir respectivement un gonflement et un dégonflement de la chambre. Pour comprendre les phases de contraction et de décontraction du manchon 2, il est utile de préciser également que lorsqu'une pression atmosphérique est générée à l'intérieur d'une chambre, le volume intérieur de celle-ci augmente impliquant d'office une contraction de la membrane 2 du manchon de la chambre 7 correspondante causant ipso facto un rétrécissement du volume intérieur du manchon. A l'opposé, le manchon se dilate dès qu'un vide est créé à l'intérieur d'une chambre 7.

Un autre objet principal de l'invention est de disposer sur la hauteur du manchon 2, à l'intérieur du gobelet 1, trois étages distincts avec chacun un rôle bien déterminé.

Le premier étage, délimité sur la hauteur de la chambre supérieure 7a, définit un poste de traite P1. Dans ce poste P1, les contractions et les décontractions alternées de la membrane supérieure 2a du manchon 2 agissent sur l'entière hauteur du trayon 5 engagé à l'intérieur afin de tirer le lait de la pointe de ce dernier.

Le deuxième étage, délimité entre la chambre supérieure 7a et la chambre inférieure 7b, définit un poste temporisateur P2. Dans ce poste, une chambre indéformable intermédiaire 7c confinée à l'intérieur du manchon 2 forme une frontière entre la chambre supérieure 7a et la chambre inférieure 7b.

Le troisième étage, délimité sur la hauteur de la chambre inférieure 7b, définit un poste de régulation P3. Dans ce poste, les contractions et les décontractions de la membrane 2b ferment et ouvrent respectivement le passage de l'ouverture du manchon 2 entre la chambre 7c du poste P2 et le tuyau 4.

Les gobelets trayeurs I et II sont proposés ci-après afin d'illustrer deux modes de réalisations possibles utilisant les principes fondamentaux des trois postes P1, P2, P3 mettant en oeuvre la technique de traite originale de l'invention.

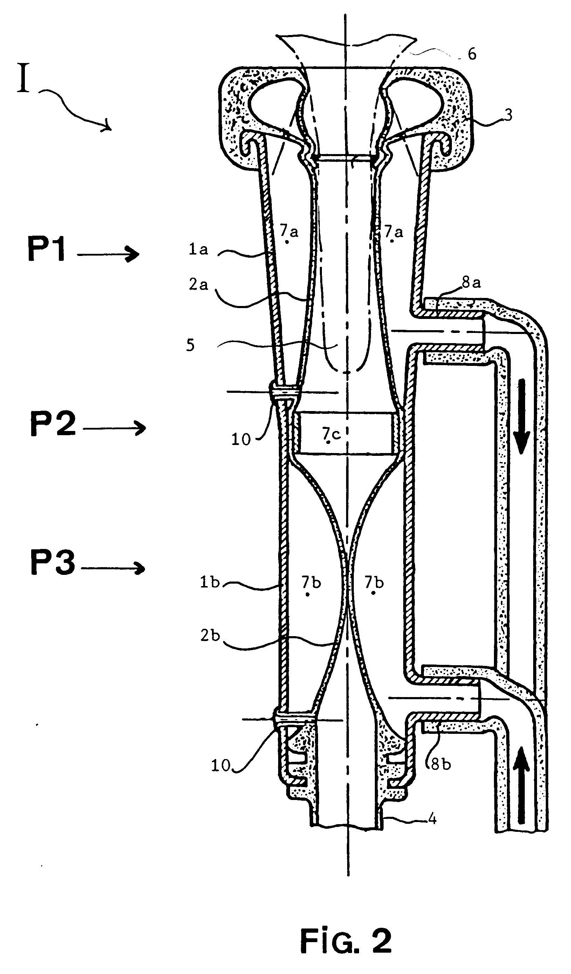

Ainsi, dans le gobelet trayeur I, illustré sur les dessins des figures 1 et 2, la chambre intermédiaire 7c du poste temporisateur P2 est délimitée au moyen d'une bague rigide 9 qui, disposée à l'intérieur du manchon 2, plaque la membrane de ce dernier contre la paroi intérieure du gobelet 1.

Cette bague 9 est installée à l'intérieur du manchon 2 et peut éventuellement être règlée sur la hauteur du gobelet 1. Elle permet en outre de garder une continuité de la membrane du manchon 2 sur toute la hauteur du gobelet 1.

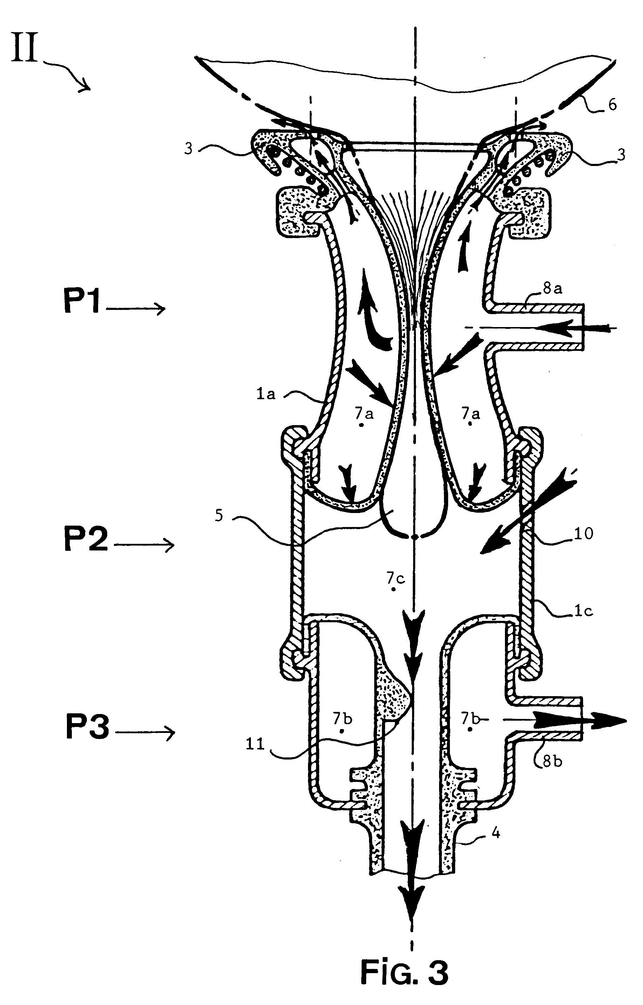

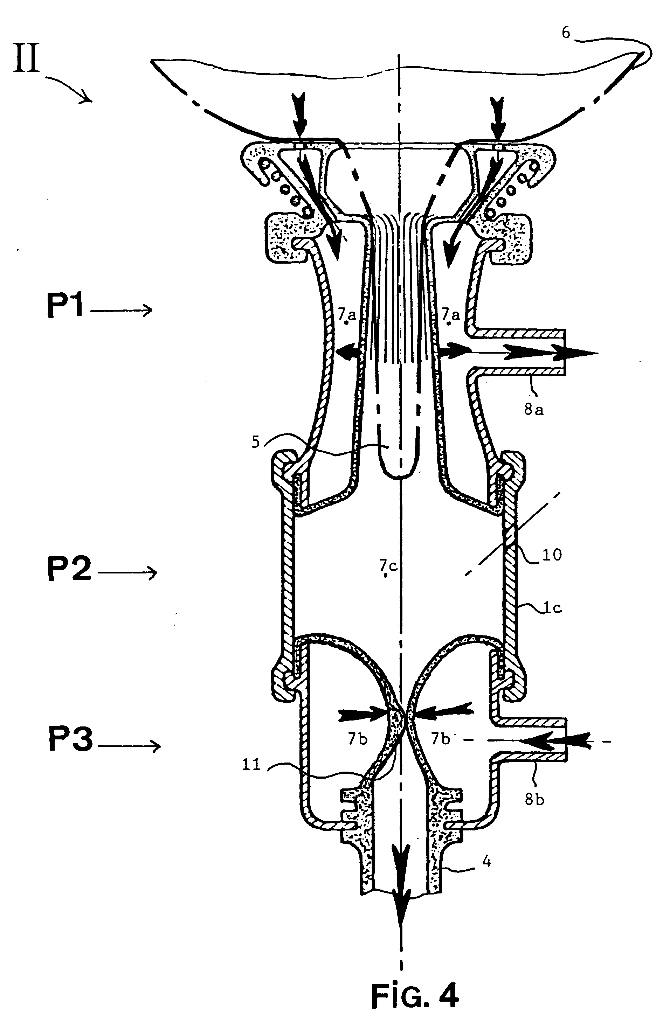

Dans le gobelet trayeur II de l'invention, illustré sur les dessins des figures 3 et 4, le gobelet 1 est d'une part, constitué par l'assemblage de deux corps distincts supérieur 1a et inférieur 1b et le manchon 2 d'autre part, est constitué par deux membranes distinctes 2a et 2b délimitant la première avec la paroi interne du gobelet 1a, la chambre de travail supérieure 7a et la deuxième, avec celle du gobelet inférieur 1b, la chambre de travail inférieure 7b. Les deux corps distincts 1a et 1b du gobelet 1 sont assemblés entre eux au moyen d'une pièce cylindrique de raccordement 1c façonné dans un matériau rigide pour délimiter dans son volume intérieur, la troisième chambre indéformable intermédiaire 7c du susdit poste temporisateur P3. Cette pièce de raccordement 1c est préformée à sa partie haute d'une part et à sa partie basse d'autre part, pour s'assembler de manière conjuguée aux deux corps 1a et 1b du gobelet 1 tout en assurant les fixations des deux membranes 2a et 2b du manchon 2 sur les bords inférieurs du gobelet supérieur 1a pour la membrane 2a et sur les bords supérieurs du gobelet inférieur 1b pour la membrane 2b. L'utilisation de deux corps distincts 1a et 1b pour le gobelet 1 offre un grand avantage car il permet d'adapter sur les postes P2 et P3 d'un gobelet trayeur II, toute une variété de postes P1 qui peuvent varier en dimensions selon les paramètres physiques du trayon 5 de l'animal à traire.

D'autre part, dans le gobelet trayeur II, le poste de régulation P3 peut être positionné dans un plan horizontal, normal aux postes P1 et P2, pour des raisons d'encombrement sous la mamelle de l'animal et également pour des facilités techniques de fabrication. En outre, la pièce de raccordement 1c du poste P2 ne nécessite pas sur sa hauteur la présence de la membrane du manchon 2. Aussi, cette pièce 1c peut donc être conçue dans un matériau translucide permettant ainsi de contrôler visuellement le débit et la qualité du lait sortant de la pointe du trayon 5 et stagnant temporairement dans la chambre 7c.

Comme on l'a précisé au début du présent mémoire, les postes P1, P2 et P3 ont des rôles distincts bien déterminés.

En effet, pendant la phase de traite proprement dite, illustrée sur les dessins des figures 1 et 3, la chambre 7a est alimentée en pression atmosphérique par l'intermédiaire de l'embout 8a et la chambre 7b crée un vide par l'évacuation de l'air vers l'extérieur, via l'embout 8b. Sur les dessins des figures 1 et 3, on remarquera que le volume intérieur de la chambre 7a du poste P1 augmente par une déformation de la membrane 2a du manchon 2 qui exerce alors à l'intérieur de ce dernier, une contraction sur le trayon 5. Avantageusement, cette membrane est préformée évasée vers le bas, de manière à subir une élongation vers le bas lorsque la chambre 7a augmente en volume. Cette élongation de la membrane 2a a pour objet de donner à la mère la sensation d'une traite manuelle. Pendant la même phase de traite, la chambre 7b, quant à elle, régresse en volume augmentant de ce fait l'ouverture de passage entre la chambre intermédiaire 7c et le tuyau d'évacuation 4 afin d'autoriser l'expulsion de l'air vers le tuyau 4 et l'évacuation simultanée du lait tiré.

Selon une caractéristique particulièrement avantageuse de l'invention, un accélérateur formé d'un conduit de dérivation 10 est ménagé à travers la paroi du gobelet 1 et éventuellement à travers celle du manchon 2 afin de mettre en communication le volume intérieur de ce dernier avec l'extérieur du gobelet 1. Cet accélérateur 10 a pour objet de favoriser l'expulsion de l'air et du lait de l'intérieur du manchon 2 vers le tuyau 4. De préférence, et ce dans le cas du gobelet trayeur II, ce conduit de dérivation 10 est ménagé au niveau de la troisième chambre intermédiaire 7c à travers la pièce de raccordement 1c.

Pendant la phase de repos du trayon 5, telle qu'elle est illustrée sur les dessins des figures 2 et 4, le vide est créé dans la chambre 7a et la pression atmosphérique est générée à l'intérieur de la chambre 7b. Ainsi, la chambre 7a régresse en volume libérant ainsi le trayon 5 de l'emprise de la membrane 2a. Comme cette dernière est avantageusement préformée de manière à être évasée vers le bas, le point d'adhérence de la membrane 2a sur le trayon 5 est reporté en hauteur. Simultanément, l'augmentation du volume de la chambre inférieure 7b ferme le passage de l'ouverture du manchon 2 entre la chambre intermédiaire 7c et le tuyau d'évacuation 4 coupant ainsi l'effet de dépression qu'engendrerait le vide, via ledit tuyau 4. Selon une caractéristique particulièrment avantageuse de l'invention, illustrée sur les dessins des figures 3 et 4, le gobelet-trayeur II est remarquable en ce que la membrane 2b du manchon 2 comporte, au niveau de la chambre inférieure 7b du poste P3, un bosselage interne 11 permettant, lorsque ladite chambre est en phase de pression (cf. figure 4) de fermer complètement le sudit passage. Le poste P3 joue donc un rôle de régulation qui est synchronisé avec le poste P1, lequel joue un rôle proprement dit de traite par massage du trayon 5 alors que le poste P2 sert de poste intermédiaire temporisateur de récepteur provisoire de volume de lait tiré pendant une première phase de contraction pour être évacué pendant le deuxième phase de contraction dudit trayon. En outre, la chambre intermédiaire 1c permet de reposer la pointe du trayon 5 quelle que soit la déformabilité de la membrane 2a.

L'intérêt premier du manchon de l'invention définissant les trois postes de travail P1, P2, P3 est de mettre en place une nouvelle technique de traite automatique qui permet entre autres de n'exécuter le massage du trayon 5 que dans le poste P1, et de fermer dans le poste P3, le passage de vide entre la chambre 1c et le tuyau 4, pendant la phase de relaxation du trayon 5 ou en cas de décrochage du gobelet du trayon 5. Il est possible, à partir de cette nouvelle technique, d'imaginer une sophistication des grandes installations tel un contrôle électronique assisté par une régulation.

Afin de permettre une meilleure compréhension des dessins, une liste des références avec leurs légendes est ci-après énumérée.

| | |
|---|---|
| I,II | Gobelets trayeurs |
| 1 | Corps du gobelet |
| 1a | Corps supérieur du gobelet |
| 1b | Corps inférieur du gobelet |
| 1c | Pièce de raccordement |
| 2 | Manchon |
| 2a | Membrane supérieure du manchon 2 |
| 2b | Membrane inférieure du manchon 2 |
| 3 | Lèvre |
| 4 | Tuyau d'évacuation |
| 5 | Trayon |
| 6 | Mamelle |
| 7a | Chambre supérieure |
| 7b | Chambre inférieure |
| 7c | Chambre intermédiaire |
| 8a | Embout de la chambre 7a |
| 8b | Embout de la chambre 7b |
| 9 | Bague |
| 10 | Conduit de dérivation |
| 11 | Bosselage |

**Revendications**

1. Gobelet-trayeur comprenant un manchon (2) dans lequel vient se loger le trayon (5) d'un animal et qui, façonné dans une membrane déformable préformée d'une lèvre (3) à son extrémité supérieure et recevant à son extrémité inférieure un tuyau (4) alimenté en vide pour l'évacuation du lait vers un collecteur, est emmanché dans un gobelet (1) de manière à délimiter sur la hauteur de ce dernier au moins deux chambres de travail (7a et 7b) confinées entre la paroi indéformable du gobelet (1) et la paroi déformable du manchon (2) et séparées par une frontière, chacune de ces deux chambres (7a et 7b), de volume variable, communiquant avec l'extérieur au moyen de deux embouts (8a et 8b) débouchant à l'extérieur dudit gobelet afin que lesdites chambres (7a et 7b) soient alimentées par des cycles, simultanés et en opposition de phase, de pression et de dépression, de manière à ce que la membrane (2a) de la chambre supérieure (7a) du manchon (2) puisse emprisonner le trayon (5) sur toute sa hauteur afin que la chambre supérieure (7a) ait une action directe sur le trayon (5) de l'animal et à ce que d'autre part, la membrane (2b) de la chambre inférieure (7b) ne joue le rôle que de régulateur en fermant et/ou en ouvrant le passage du circuit d'alimentation en vide à l'intérieur du manchon (2), entre ladite frontière et le susdit tuyau d'évacuation (4) caractérisé par le fait qu'il comprend une troisième chambre intermédiaire (7c) délimitant ladite frontière entre la chambre supérieure (7a) et la chambre inférieure (7b).

2.    Gobelet-trayeur selon la revendication 1, caractérisé par le fait que la susdite chambre intermédiaire (7c) est délimitée par une pièce de raccordement (1c) permettant d'assembler le susdit gobelet (1) constitué par deux corps distincts supérieur (1a) et inférieur (1b), le manchon (2) étant alors constitué par deux membranes distinctes (2a et 2b) délimitant la première (2a) avec la paroi interne du corps supérieur (1a), la chambre de travail supérieure (7a) et la deuxième (2b) avec celle du corps inférieur (1b), la chambre de travail inférieure (7b).

3.    Gobelet-trayeur selon la revendication 1, caractérisé par le fait que la susdite chambre intermédiaire (7c) est délimitée au moyen d'une bague rigide (9) disposée à l'intérieur du manchon (2) de façon à venir plaquer la membrane de ce dernier contre la paroi intérieure de la partie cylindrique du gobelet (1).

4.    Gobelet-trayeur selon la revendication 1, caractérisé par le fait que la membrane (2b) du susdit manchon (2) comporte, au niveau de la chambre inférieure (7b), un bosselage interne (11) permettant, lorsque la chambre inférieure (7b) est en phase de pression, de fermer complètement le passage du circuit d'alimentation en vide à l'intérieur du manchon (2), entre la troisième chambre intermédiaire (7c) le susdit tuyau d'évacuation (4).

5.    Gobelet-trayeur selon la revendication 1, **CARACTERISE PAR LE FAIT QUE** les deux chambres supérieure (7a) et inférieure (7b) de travail sont alimentées, simultanément et en alternance, en vide et en pression atmosphérique pour obtenir les phases de "dépression" et de "pression" du cycle de travail desdites chambres.

6.    Gobelet-trayeur selon la revendication 1, **CARACTERISE PAR LE FAIT QUE** la membrane (2b) du manchon (2) délimitant la chambre inférieure (7b) est façonné dans un matériau préformé de manière à ce qu'en position normale de repos, où la susdite chambre inférieure (7b) est alimentée en pression atmosphérique, elle ferme le passage du circuit d'alimentation en vide à l'intérieur du manchon (2), entre la troisième chambre intermédiaire (7c) et le susdit tuyau d'évacuation (4).

7.    Gobelet-trayeur selon les revendications 1 et 2, **CARACTERISE PAR LE FAIT QUE** la susdite pièce de raccordement (1c) est préformée à sa partie haute d'une part et à sa partie basse d'autre part, pour s'assembler de manière conjuguée aux deux corps (1a et 1b) du gobelet (1) tout en assurant les fixations des deux membranes (2a et 2b) du manchon (2) sur les bords inférieurs du corps supérieur (1a) pour la première et sur les bords supérieurs du corps inférieur (1b) pour la seconde.

8.    Gobelet-trayeur selon l'une quelconque des revendications 1 à 7, **CARACTERISE PAR LE FAIT QU'**il comprend au moins un accélérateur formé d'un conduit de dérivation (10) traversant la paroi du gobelet (1) et/ou celle de la membrane du manchon (2), pour mettre en communication l'intérieur du manchon (2) avec l'extérieur du gobelet (1).

9.    Gobelet-trayeur selon la revendication 9, **CARACTERISE PAR LE FAIT QUE** le conduit de dérivation (10) du susdit accélérateur est ménagé au niveau de la troisième chambre intermédiaire (7c).

10.   Gobelet-trayeur selon l'ensemble des revendications 1 à 9, **CARACTERISE PAR LE FAIT QUE** la membrane (2a) de la chambre supérieure (7a) est préformée de manière à être évasée vers le bas afin de reporter en hauteur le point d'adhérence de la membrane (2a) sur le trayon (5) lorsque la chambre supérieure (7a) est alimentée en dépression.

**Claims**

1.    Teat cup comprising a sleeve (2) in which the teat (5) of an animal is engaged and which, being fashioned from a deformable membrane with a preformed lip (3) at its upper end and accommodating at its lower end a tube (4) supplied with vacuum for the discharge of milk towards a collecting tank, is fitted on a cup (1) so as to delimit on the height thereof at least two working chambers (7a and 7b) confined between the non-deformable wall of the cup (1) and the deformable wall of the sleeve (2) and separated by a border, each of the said two chambers (7a and 7b), having a variable volume, being in communication with the outside by means of two nozzles (8a and 8b) opening to the outside of said cup so that said chambers (7a and 7b) are supplied by simultaneous and phase-opposed pressure and low-pressure cycle, so that the membrane (2a) of the upper chamber (7a) of the sleeve (2) can catch the teat (5) along its entire height and so that on the other hand, the membrane (2b) of the lower chamber (7b) acts only as a regulator by closing and/or opening the passage through the vacuum supply circuit inside the sleeve (2), between said border and said discharge tube (4), characterized in that it comprises a third, intermediate chamber (7c) delimiting said border between the upper chamber (7a) and the lower chamber (7b).

2. Teat cup as claimed in claim 1, characterized in that said intermediate chamber (7c) is delimited by a connecting part (1c) which allows assembling said cup (1) consisting of two distinct upper (1a) and lower (1b) bodies, the sleeve (2) then consisting of two distinct membranes (2a and 2b), the first one (2a) delimiting the upper working chamber (7a) with the internal wall of the upper body (1a) and the second one (2a) delimiting the lower working chamber (7b) with the wall of the lower body (1b).

3. Teat cup as claimed in claim 1, characterized in that said intermediate chamber (7c) is delimited by means of a rigid ring (9) positioned inside the sleeve (2) so as to press the membrane thereof against the inside wall of the cylindric part of the cup (1).

4. Teat cup as claimed in claim 1, characterized in that the membrane (2b) of said sleeve (2) comprises, at the level of the lower chamber (7b), an internal indentation (11) which, when the lower chamber (7b) is in the pressure phase, allows completely closing the passage through the vacuum supply circuit inside the sleeve (2), between the third intermediate chamber (7c) and said discharge tube (4).

5. Teat cup as claimed in claim 1, characterized in that both the upper (7a) and the lower (7b) working chambers are simultaneously and alternatingly supplied with vacuum and atmospheric pressure to obtain the "low pressure" and "pressure" phases of the working cycle of said chambers.

6. Teat cup as claimed in claim 1, characterized in that the membrane (2b) of the sleeve (2) delimiting the lower chamber (7b) is so fashioned from a preformed material that in its normal resting position, where said lower chamber (7b) is supplied with atmospheric pressure, it closes the passage through the vacuum supply circuit inside the sleeve (2), between the third intermediate chamber (7c) and said discharge tube (4).

7. Teat cup as claimed in claims 1 and 2, characterized in that said connecting part (1c) is so preformed in its upper part on one hand and in its lower part on the other hand as to be jointly assembled with the two bodies (1a and 1b) of the cup (1) while ensuring the fixation of the two membranes (2a and 2b) of the sleeve (2) on the lower edges of the upper body (1a) for the first one and on the upper edges of the lower body (1b) for the second one.

8. Teat cup as claimed in any one of claims 1 to 7, characterized in that it comprises at least one accelerator made of a bypass duct (10) passing through the wall of the cup (1) and/or that of the membrane of the sleeve (2) to bring the inside of the sleeve (2) into communication with the outside of the cup (1).

9. Teat cup as claimed in claim 8, characterized in that the bypass duct (10) of said accelerator is placed at the level of the third intermediate chamber (7c).

10. Teat cup as claimed in any one of claims 1 to 9, characterized in that the membrane (2a) of the upper chamber (7a) is so preformed as to be flared downwards in order to displace in height the adhesion point of the membrane (2a) on the teat (5) when the upper chamber (7a) is supplied with low pressure.

**Patentansprüche**

1. Zitzenbecher mit einer Manschette (2), in die die Zitze (5) eines Tieres platznimmt und, die aus einer nachgiebigen Membrane mit einer an ihrer oberen Extremität vorgeformten Lippe (3) besteht und an derer unteren Extremität sich ein für den Abfluß der Milch zu einem Sammelbehälter vakuumversorgter Schlauch (4) anschließt, und in einem Becher (1) derart gesteckt, daß sie in der Höhe dieses letztgenannten mindestens zwei zwischen der nichtnachgiebigen Wand des Bechers (1) und der nachgiebigen Wand der Manschette (2) confinierten, durch eine Grenze abgetrennten Arbeitskammern (7a et 7b) abgrenzt, jede dieser zwei Kammern (7a et 7b) derer Rauminhalt variabel ist, über zwei außerhalb des genannten Bechers mündenden Nippel (8a et 8b) mit Außen kommuniziert, damit die genannten Kammern (7a et 7b) durch simultanen und gegenphasigen Druck- und Unterdruckzyzlen versorgt werden, so daß die Membrane (2a) der oberen Kammer (7a) der Manschette (2) die Zitze (5) umschließen kann, damit die obere Kammer (7a) eine direkte Wirkung auf die Zitze (5) des Tieres übt, und damit andererseits die Membrane (2b) der unteren Kammer (7b) nur noch die Rolle eines Regulators spielt, indem sie den Weg der Vakuumszuflußleitung in der Manschette (2) zwischen der genannten Grenze und der o.g. Abflußleitung (4) öffnet und/oder schließt, dadurch gekennzeichnet, daß er eine dritte Zwischenkammer (7c) hat, die die genannte Grenze zwischen der oberen Kammer (7a) und der unteren Kammer (7b) abgrenzt.

2. Zitzenbecher nach Anspruch 1, gekennzeichnet dadurch, daß die o.g. Zwischenkammer (7c) durch ein Verbindungsstück (1c) abgegrenzt ist, das die Zusammensetzung des aus zwei verschiedenen oberen (1a) und unteren (1b) Körpern bestehenden o.g. Bechers (1) ermöglicht, wobei die Manschette (2) dann aus zwei verschiedenen Membranen (2a et 2b) besteht, wovon die erste (2a) grenzt dabei mit der inneren Wand des oberen Körpers (1a) die obere Arbeitskammer (7a), und die zweite (2b) mit der des unteren Körpers (1b) die untere Arbeitskammer (7b) ab.

3. Zitzenbecher nach Anspruch 1, gekennzeichnet dadurch, daß die o.g. Zwischenkammer (7c) mittels einem in der Manschette (2) angebrachten steifen Ring (9) abgegrenzt ist, der auf dieser Weise die Membrane letzerer gegen die innere Wand des zylindrischen Teils des Bechers (1) drückt.

4. Zitzenbecher nach Anspruch 1, gekennzeichnet dadurch, daß die Membrane (2b) der o.g. Manschette (2) an der Höhe der unteren Kammer (7b) eine innere Telle (11) aufweist, die, wenn die untere Kammer (7b) in Druckphase ist, den Weg der Wakuumzuflußleitung in der Manschette (2) , zwischen der dritten Zwischenkammer (7c) und der o.g. Abflußleitung (4) vollkommen schließt.

5. Zitzenbecher nach Anspruch 1, gekennzeichnet dadurch, daß die zwei oberen (7a) und unteren (7b) Arbeitskammern simultan und gegenphasig, mit Vakuum und mit athmosphärischem Druck versorgt werden, um die "Unterdruck-" und "Druckphasen" des Arbeitszyklus der genannten Kammern zu erreichen.

6. Zitzenbecher nach Anspruch 1, gekennzeichnet dadurch, daß die Membrane (2b) der Manschette (2) aus einem vorgeformten Material besteht, so daß sie in der normalen Ruhestellung, wo die o.g. untere Kammer (7b) mit athmosphärischem Druck versorgt wird, den Weg der Vakuumzufuhrleitung in der Manschette (2), zwischen der dritten Zwischenkammer (7c) und der o.g. Abflußleitung (4) schließt.

7. Zitzenbecher nach Anspruch 1 et 2, gekennzeichnet dadurch, daß das o.g. Zwischenstück (1c) an seinem Oberteil einerseits und an seinem Unterteil andererseits vorgeformt ist, um sich zu den zwei Körpern (1a et 1b) des Bechers (1) gekoppelt anzuschließen, wobei es gleichzeitig die Befestigung der zwei Membranen (2a et 2b) der Manschette (2) auf der unteren Ränder des oberen Körpers (1a) für die erste und auf der oberen Ränder des unteren Körpers (1b) für die zweite gewährleistet.

8. Zitzenbecher nach einem der Ansprüche 1 bis 7, gekennzeichnet dadurch, daß er mindestens einen Beschleuniger aufweist, dieser besteht aus einer Ableitung (10), die die Wand des Bechers (1) und/oder die der Membrane der Manschette (2) durchquert, um den Innenraum der Manschette (2) mit außerhalb des Bechers (1) zu verbinden.

9. Zitzenbecher nach Anspruch 9, gekennzeichnet dadurch, daß die Ableitung (10) des o.g. Beschleunigers an der Höhe der dritten Zwischenkammer (7c) angeordnet ist.

10. Zitzenbecher nach einem der Ansprüche 1 bis 9, gekennzeichnet dadurch, daß die Membrane der oberen Kammer (7a) vorgeformt ist, so daß sie konisch nach unten erweitert ist, damit der Adhäsionspunkt der Membrane (2a) auf der Zitze (5) nach unten verlagert wird, wenn die obere Kammer (7a) mit Unterdruck versorgt wird.

I

P1 →

P3 →

P2 →

FiG. 1

I

P1 →

P2 →

P3 →

**FIG. 2**

II

6

3

3

P1 →

8a

1a

7a

7a

P2 →

5

10

7c

1c

P3 →

7b

7b

11

8b

4

FIG. 3

## FiG. 4